# EUROPÄISCHE PATENTSCHRIFT

(11) **EP 4 237 471 B1**
(45) Veröffentlichungstag und Bekanntmachung des Hinweises auf die Patenterteilung: **02.09.2026**
(21) Anmeldenummer: 21786085.7
(22) Anmeldetag: 28.09.2021
(51) Int. Cl.: C08J 5/18, C08L 23/14, H01G 4/14, H01G 4/18

(54) **KONDENSATOR ENTHALTEND BIAXIAL VERSTRECKTE POLYPROPYLEN-CYCLOOLEFINPOLYMER-FOLIE ALS DIELEKTRIKUM UND VERWENDUNG DIESER FOLIE**
CAPACITOR CONTAINING A BIAXIALLY ORIENTED POLYPROPYLENE-CYCLIC OLEFIN POLYMER FILM AS A DIELECTRIC, AND USE OF SAID FILM
CONDENSATEUR CONTENANT UN FILM POLYMÈRE DE CYCLOOLÉFINE-POLYPROPYLÈNE ÉTIRÉ DE FAÇON BIAXIALE EN TANT QUE DIÉLECTRIQUE ET UTILISATION DE CE FILM

(30) Priorität: 27.10.2020 DE 102020006588
(43) Veröffentlichungstag der Anmeldung: 06.09.2023
(73) Patentinhaber: TOPAS Advanced Polymers GmbH, 65479 Raunheim (DE)
(72) Erfinder: GOERLITZ, Wolfram, 65193 Wiesbaden (DE)
(74) Vertreter: Ackermann, Joachim
(86) Internationale Anmeldenummer: PCT/EP2021/000113
(87) Internationale Veröffentlichungsnummer: WO 2022/089771

(56) Entgegenhaltungen:
- EP-A2- 0 610 814
- WO-A1-2018/210854
- DE-A1- 102017 004 111
- DE-A1- 19 536 043
- TOPAS ADVANCED POLYMERS GMBH: "Cyclic Olefin Copolymer Blends - A New Approach for High Temperature Polypropylene Film Capacitors", RESEARCH DISCLOSURE KENNETH MASON PUBLICATIONS, HAMPSHIRE, UK, vol. 655, no. 30, 1 November 2018 (2018-11-01), pages 1192, XP007146976, ISSN: 0374-4353, [retrieved on 20181005]

## Beschreibung

Die vorliegende Erfindung betrifft Kondensatoren, die ausgewählte biaxialverstreckte Polypropylenfolien mit geringen Zusätzen an Cycloolefinpolymer als Dielektrikum enthalten.

Biaxial verstreckte PP-Folien (BOPP-Folien) zum Einsatz als Dielektrikum in Kondensatoren sind in mehreren Patentdokumenten beschrieben, beispielsweise in WO 2015/091829 A1, US 5,724,222 A und EP 2 481 767 A2. Biaxial verstreckte Polyolefinfolien enthaltend Cycloolefinpolymere sind aus der WO 2018/197034 A1, DE 10 2017004111A1, und der DE 195 36 043 A1 bekannt.

BOPP-Folien sowie biaxial verstreckte Polyolefinfolien enthaltend Cycloolefinpolymere haben ausgezeichnete elektrische und mechanische Eigenschaften. Letztere zeichnen sich durch eine erhöhte Beständigkeit bei Temperaturen oberhalb von 100 °C sowie durch einen geringen Thermoschrumpf aus.

Aus der WO 2018/197034 A1 sind Polyolefinfolien bekannt, die sich vorzugsweise als Kondensatorfolien einsetzen lassen und die sich durch eine erhöhte Beständigkeit der elektrischen Eigenschaften und durch einen geringen Schrumpf bei erhöhten Temperaturen auszeichnen. Die in den Beispielen dieses Dokuments beschriebenen Folien weisen einen Gehalt an Cycloolefincopolymeren von mindestens 20 Gew. % auf.

WO 2018/210854 A1 beschreibt Kondensatoren mit Folien aus Polypropylen und Cycloolefincopolymeren, die sich durch eine erhöhte Beständigkeit der elektrischen Eigenschaften bei erhöhten Temperaturen auszeichnen. Die in diesem Dokument beschriebenen Kondensatorfolien weisen einen Gehalt an Cycloolefincopolymeren von mindestens 20 Gew. % auf.

Über weitere Eigenschaften solcher Folien wird in einer Veröffentlichung von W. Goerlitz, A New-Approach for High Temperature Polypropylene Film Capacitors, in Research Disclosure Journal, Nov. 2018, DB no. 655030 berichtet.

Bei vorbekannten Folien aus Polypropylen und Cycloolefincopolymeren wurde angenommen, dass relativ hohe Mengen an Cycloolefincopolymer erforderlich sind, um verbesserte Eigenschaften zu erzielen. In diesen Veröffentlichungen ist von mindestens 10 Gew. %, vorzugsweise von 20 - 30 Gew. % die Rede.

Ein Nachteil, der bei der Prüfung der verfügbaren Literatur sichtbar wird ist die Tatsache, dass solche Filme im Vergleich zu Filmen aus reinem Polypropylen bei Raumtemperatur eine verringerte Durchschlagspannung aufweisen.

Überraschend wurde gefunden, dass Polypropylenfolien verbesserte Eigenschaften zeigen, wenn diese einen geringen Gehalt an Cycloolefinpolymeren aufweisen. Dies ist nicht offensichtlich, da die Fachwelt bislang annahm, dass für verbesserte thermische Eigenschaften ein höherer Gehalt an Cycloolefinpolymer erforderlich ist, wobei der Nachteil niedrigerer Durchschlagspannungen in Kauf genommen werden musste.

Eine Aufgabe der vorliegenden Erfindung besteht in der Bereitstellung von Kondensatoren, die neben einer ausgezeichneten thermischen Beständigkeit eine hohe Durchschlagspannung besitzen.

Eine weitere Aufgabe der vorliegenden Erfindung besteht in der Bereitstellung von Polypropylenfolien mit ausgezeichneter thermischer Beständigkeit und hoher Durchschlagspannung, die auf herkömmlichen Anlagen für die OPP-Herstellung erzeugt werden können.

Eine weitere Aufgabe der vorliegenden Erfindung besteht in der Bereitstellung von Polypropylenfolien, die in wichtigen Eigenschaften bekannten OPP

Kondensatorfolien näher kommen als bislang für den Einsatz in Kondensatoren vorgeschlagene PP/COC-Folien.

Die vorliegende Erfindung betrifft Kondensatoren enthaltend als Dielektrikum eine biaxial verstreckte Folie enthaltend eine Mischung aus Polypropylen und Cycloolefinpolymer, mit der Maßgabe, dass der Anteil an Cycloolefinpolymer in der Mischung zwischen 3 und 18 Gew. % beträgt, wobei die biaxial verstreckte Folie nach 24-stündiger Behandlung mit Cyclohexan bei Raumtemperatur bei der rasterelektronenmikroskopischen Untersuchung keine Phasenstruktur zeigt und wobei die biaxial verstreckte Folie bei der lichtmikroskopischen Untersuchung eine Oberflächenstruktur ohne Fibrillen zeigt.

Die erfindungsgemäß eingesetzte Polypropylenfolie enthält eine Mischung aus Polypropylen und einem geringen Anteil, also zwischen 3 und 18 Gew. %, an Cycloolefinpolymer. Dabei bezieht sich die Prozentangabe auf die Gesamtmasse der Mischung aus Polypropylen und Cycloolefinpolymer. Vorzugsweise beträgt der Anteil an Cycloolefinpolymer in der Mischung zwischen 3 und 14 Gew. %, besonders bevorzugt zwischen 4 und 14 Gew. %, insbesondere zwischen 5 und 14 Gew. %, ganz besonders bevorzugt zwischen 6 und 12 Gew. %, und äußerst bevorzugt zwischen 7 und 9 Gew. %.

Die erfindungsgemäß eingesetzten Polypropylenfolien zeichnen sich im Vergleich mit Polypropylenfolien, die einen erhöhten Anteil an Cycloolefinpolymer enthalten, durch eine bessere Homogenität der Polymermatrix und der Oberfläche aus. Erfindungsgemäß eingesetzte Polypopylenfolien kommen damit in wichtigen Eigenschaften bekannten OPP Kondensatorfolien näher als bislang für den Einsatz in Kondensatoren vorgeschlagene PP/COC-Folien.

Die verbesserte Homogenität der erfindungsgemäß eingesetzten Polypropylenfolien lässt sich durch rasterelektronenmikroskopische Untersuchungen nachweisen.

Die verbesserte Oberflächenstruktur der erfindungsgemäß eingesetzten Polypropylenfolien lässt sich durch lichtmikroskopische Untersuchungen nachweisen.

Für rasterelektronenmikroskopische Untersuchungen wird eine Folie mit einem Mikrotom geschnitten. Die erhaltenen Schnitte werden sodann bei Raumtemperatur für 24 Stunden mit Cyclohexan in Kontakt gebracht. Dadurch werden die Cycloolefinpolymerphasen aus der Folie entfernt und diese Stellen erscheinen in der rasterelektronenmikroskopischen Untersuchung dunkel.

Die mit Cyclohexan behandelten erfindungsgemäß eingesetzten Polypropylenfolien zeigen bei der rasterelektronenmikroskopischen Untersuchung keine Phasenstruktur, während Polypropylenfolien mit einem erhöhten Anteil an Cycloolefinpolymer separate Phasen von Cycloolefinpolymer erkennen lassen.

Unter dem Begriff "keine Phasenstruktur" ist im Sinne dieser Beschreibung zu verstehen, dass in der rasterelektronenmikroskopischen Untersuchung von mit Cyclohexan behandelten Folien bei einer Auflösung von 0,1 µm keine dunklen Strukturen sichtbar sind, welche das Vorliegen von Cycloolefinpolymer-Phasen anzeigen würden.

Für weitere Untersuchungen wird die Oberfläche einer Folie mit einem Lichtmikroskop betrachtet. Erfindungsgemäß eingesetzte Polypropylenfolien zeigen dabei Oberflächenstrukturen, welche für OPP-Kondensatorfolien typisch sind. Es sind unregelmäßig verlaufende Linienmuster erkennbar, wobei die Längsabmessungen einzelner Linien bis zu 100 µm betragen. Im Gegensatz dazu zeigen Polypropylenfolien mit einem erhöhten Anteil an Cycloolefinpolymer deutlich fibrillare Oberflächenstrukturen. Hier treten also parallel zueinander verlaufende Strukturen auf, wobei die Längsabmessungen einzelner Strukturen mehrere Millimeter betragen können.

Erfindungsgemäß eingesetzte Filme zeigen also bei der lichtmikroskopischen Untersuchung eine Oberflächenstruktur ohne Fibrillen.

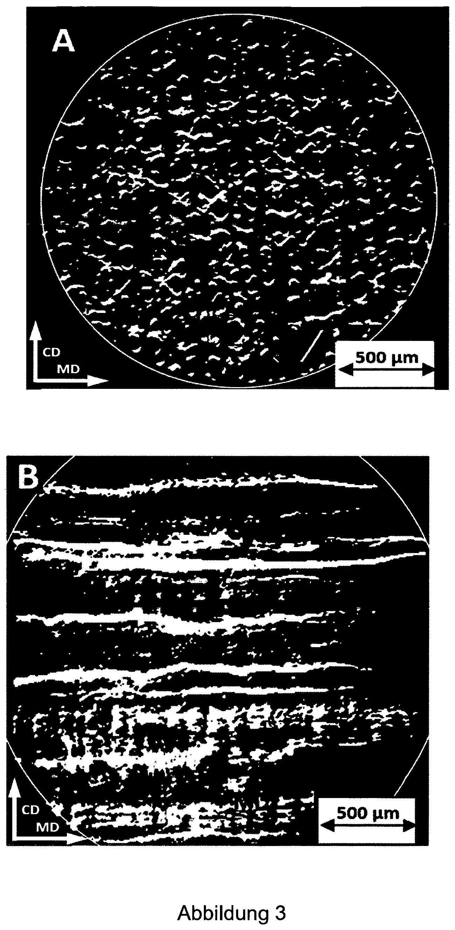

Unter dem Begriff "ohne Fibrillen" ist im Sinne dieser Beschreibung zu verstehen, dass in der lichtmikroskopischen Untersuchung der Folienoberfläche keine parallelen über 1 mm ausgedehnten Strukturen sichtbar sind. Dieses ist beispielhaft in der Abbildung 3A zu erkennen; während in der Abbildung 3B eine fibrillare Oberflächenstruktur einer herkömmlichen Folie aus PP/COC-Blends dargestellt ist. Dabei wurden folgende Aufnahmebedingungen verwendet: Stereomikroskop, numerische Apertur 0.2, Auflicht schräg, Gesichtsfeld ca. 2 mm, Vergrößerung 64x.)

Bei den erfindungsgemäß eingesetzten Cycloolefinpolymeren, handelt es sich um an sich bekannte Polymere. Dabei kann es sich um Polymere abgeleitet von einem Monomer oder von zwei oder mehr unterschiedlichen Monomeren handeln.

Die Cycloolefinpolymeren werden durch ringöffnende oder insbesondere durch ringerhaltende Polymerisation hergestellt, vorzugsweise durch ringerhaltende Copolymerisation von cyclischen Olefinen, wie Norbornen, mit nicht-cyclischen Olefinen, wie alpha-Olefinen, insbesondere Ethylen.

Durch die Wahl der Katalysatoren kann in an sich bekannter Weise gesteuert werden, ob der olefinische Ring des cyclischen Monomeren bei der Polymerisation erhalten bleibt oder geöffnet wird. Beispiele für Verfahren der ringöffnenden Polymerisation von Cycloolefinen findet man in EP 0 827 975 A2. Beispiele für Katalysatoren, die hauptsächlich bei ringerhaltender Polymerisation eingesetzt werden, sind Metallocen-Katalysatoren. Eine Übersicht über mögliche chemische Strukturen der von Cycloolefinen abgeleiteten Polymeren findet sich beispielsweise in Pure Appl. Chem., Vol. 77, No. 5, pp. 801-814 (2005).

Unter dem Begriff "Cycloolefinpolymer" sind im Rahmen dieser Beschreibung auch solche Polymere zu verstehen, welche nach der Polymerisation einer Hydrierung unterworfen worden sind, um noch vorhandene Doppelbindungen zu reduzieren.

Bei den erfindungsgemäß eingesetzten Cycloolefinpolymeren handelt es sich um Thermoplaste, die sich durch eine außerordentlich hohe Transparenz auszeichnen.

Die Glasübergangstemperatur (nachstehend auch "T_{g}" genannt) der Cycloolefinpolymeren kann vom Fachmann in an sich bekannter Weise durch Auswahl von Art und Menge der Monomeren, z.B. von Art und Menge von cyclischen und nicht-cyclischen Monomeren eingestellt werden. So ist beispielsweise von Norbornen-Ethylen-Copolymeren bekannt, dass die Glasübergangstemperatur umso höher ist, je höher der Anteil an Norbornen-Komponente im Copolymer ist. Entsprechendes gilt für Kombinationen anderer cyclischer Monomerer mit nicht-cyclischen Monomeren.

Unter Glasübergangstemperatur ist im Rahmen der vorliegenden Beschreibung die nach ISO 11357 mit der Differential-Scanning-Calorimetrie (DSC) Methode bestimmte Temperatur zu verstehen, wobei die Aufheizgeschwindigkeit 10 K/Minute beträgt.

In den erfindungsgemäß eingesetzten Polymerfolien können Cycloolefinpolymere mit Glasübergangstemperaturen von größer als 30 °C verwendet werden. Vorzugsweise betragen die Glasübergangstemperaturen 100 bis 170°C, besonders bevorzugt 120 bis 165°C, ganz besonders bevorzugt 130 bis 160°C, noch mehr bevorzugt 140 bis 160°C und äußerst bevorzugt größer als 145 bis 160°C.

In einer weiteren bevorzugten Ausführungsform der erfindungsgemäß eingesetzten Polymerfolie werden Cycloolefincopolymere eingesetzt, die sich von der ringerhaltenden Copolymerisation von mindestens einem Cycloolefin der allgemeinen Formel (I) mit mindestens einem alpha-Olefin der Formel (II) ableiten 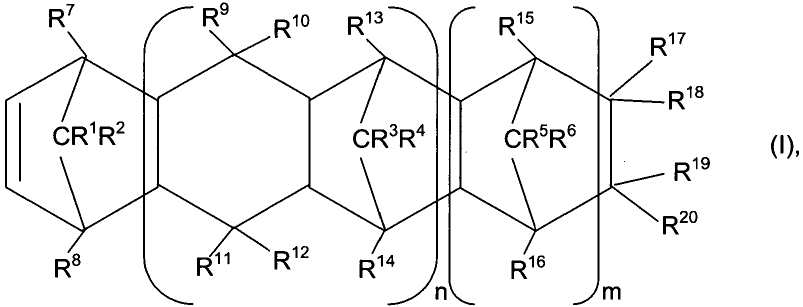 worin
n 0 oder 1 bedeutet,
m für 0 oder eine positive ganze Zahl ist, insbesondere 0 oder 1,
R¹, R², R³, R⁴, R⁵, R⁶ unabhängig voneinander Wasserstoff, Halogen,
Alkylgruppen, Cycloalkylgruppen, Arylgruppen und Alkoxygruppen bedeuten,
R⁷, R⁸, R⁹, R¹⁰, R¹¹, R¹², R¹³, R¹⁴, R¹⁵, R¹⁶ unabhängig voneinander Wasserstoff und Alkylgruppen bedeuten,
R¹⁷, R¹⁸, R¹⁹, R²⁰ unabhängig voneinander Wasserstoff, Halogen und Alkylgruppen bedeuten,
wobei R¹⁷ und R¹⁹ auch aneinander gebunden sein können, derart dass sie einen einfachen Ring oder ein Ringsystem mit mehreren Ringen bilden, wobei der Ring oder die Ringe gesättigt oder ungesättigt sein können, 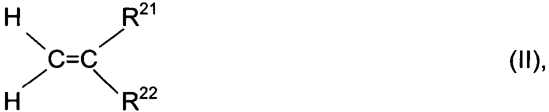
worin R²¹ und R²² unabhängig voneinander Wasserstoff und Alkylgruppen bedeuten.

In einer besonders bevorzugten Ausführungsform werden Cycloolefincopolymere eingesetzt, die sich von Verbindungen der Formeln I und II ableiten, worin n 0 ist, m 0 oder 1 bedeutet, R²¹ und R²² beide Wasserstoff bedeuten oder R²¹ Wasserstoff ist und R²² eine Alkylgruppe mit einem bis acht Kohlenstoffatomen ist, und R¹, R², R⁵ bis R⁸ und R¹⁵ bis R²⁰ vorzugsweise Wasserstoff bedeuten.

In einer ganz besonders bevorzugten Ausführungsform werden Cycloolefincopolymere eingesetzt, welche sich von Verbindungen der Formeln I und II ableiten, worin die Verbindung der Formel I Norbornen oder Tetracyclododecen ist und die Verbindung der Formel II Ethylen ist.

Ganz besonders bevorzugt werden Copolymere des vorstehend definierten Typs eingesetzt, wobei deren Copolymerisation in Gegenwart eines Metallocenkatalysators erfolgt ist.

Bevorzugte Typen von Cycloolefin-Copolymeren sind in der DE 102 42 730 A1 beschrieben. Ganz besonders bevorzugt lassen sich als Cycloolefincopolymere die Typen Topas^{®} 6013, Topas^{®} 6015 und Topas^{®} 5013 (Topas Advanced Polymers GmbH, Raunheim) einsetzen.

Es lassen sich auch Mischungen verschiedener Cycloolefinpolymerer einsetzen, insbesondere Mischungen verschiedener Cycloolefincopolymerer.

Die Herstellung der erfindungsgemäß bevorzugt eingesetzten Cycloolefincopolymeren erfolgt unter ringerhaltender Polymerisation, d.h. die bi- oder polycyclische Struktur der eingesetzten Monomereinheiten bleiben bei der Polymerisation erhalten. Beispiele für Katalysatoren sind Titanocen-, Zirkonocen- oder Hafnocen-Katalysatoren, die in der Regel kombiniert mit Aluminoxanen als Co-Katalysatoren eingesetzt werden. Diese Herstellungsweise ist bereits vielfach beschrieben, beispielsweise in dem weiter oben erwähnten Patentdokument.

Typische Beispiele für Cycloolefincopolymere sind Copolymere aus Norbornen oder Tetracyclododecen mit Ethylen. Derartige Polymere sind kommerziell erhältlich, beispielsweise unter den Handelsnamen APEL^{®} oder TOPAS^{®}.

Weitere Beispiele sind Cycloolefinpolymere, die sich von ringöffnender Polymerisation von Cyclopentadien oder von Norbornen ableiten. Derartige Polymere sind ebenfalls kommerziell erhältlich, beispielsweise unter den Handelsnamen ARTON^{®}, ZEONEX^{®} oder ZEONOR^{®}.

Bevorzugt werden Cycloolefincopolymere eingesetzt, die von den oben beschriebenen Monomeren der Formeln I und II abgeleitet sind, wobei diese Monomeren I : II im Molverhältnis von 95 : 5 bis 5 : 95 eingesetzt worden sind und die gegebenenfalls noch geringe Anteile von Struktureinheiten aufweisen, beispielsweise bis zu 10 Mol.%, bezogen auf die gesamte Monomermenge, welche von weiteren Monomeren, wie Propylen, Penten, Hexen, Cyclohexen und/oder Styrol abgeleitet sind.

Besonders bevorzugt werden Cycloolefincopolymere eingesetzt, die im Wesentlichen aus Norbornen und Ethylen bestehen, und die gegebenenfalls noch geringe Anteile, z.B. bis zu 5 Gew. %, bezogen auf die Gesamtmonomermenge, von Struktureinheiten aufweisen, welche von weiteren Monomeren, wie Propylen, Penten, Hexen, Cyclohexen und/oder Styrol abgeleitet sind.

Weitere besonders bevorzugt eingesetzte Cycloolefinpolymere weisen einen Melt-Flow-Index zwischen 0,3 - 4 g / 10 Minuten auf, gemessen bei einer Temperatur von 230°C unter einer Belastung von 2,16 kg.

Als Hauptkomponente enthält die erfindungsgemäß eingesetzte Folie ein oder mehrere Polypropylene. Dabei handelt es sich im Wesentlichen um Propylenhomo- oder -copolymere. Es kann sich um teilkristalline PropylenHomopolymere, die vorzugsweise eine Kristallit-Schmelztemperatur von 160 bis 165°C aufweisen und/oder um teilkristalline Propylen- C₄-C₈-alpha-Olefin-Copolymere, die vorzugsweise eine Kristallit-Schmelztemperatur von 100 bis 160°C aufweisen, handeln.

Unter Kristallitschmelztemperatur ist im Rahmen der vorliegenden Beschreibung die nach ISO 11357 mit der Differential-Scanning-Calorimetrie (DSC) Methode bestimmte Temperatur zu verstehen, wobei die Aufheizgeschwindigkeit 20 K/Minute beträgt.

Beispiele für C₄-C₈-alpha-Olefine sind Buten-1, Hexen-1 und Octen-1.

Bei den Polypropylenen handelt es sich um lineare oder um verzweigte Typen. Die Abfolge unterschiedlicher Monomereinheiten in diesen Polypropylenen kann statistisch oder in der Form von Blöcken sein. Die einzelnen Monomereinheiten können sterisch unterschiedlich angeordnet sein, beispielsweise isotaktisch, syndiotaktisch oder ataktisch.

Polypropylen ist ein mit Hilfe stereospezifisch wirkender Katalysatoren hergestelltes isotaktisches, syndiotaktisches oder ataktisches Polypropylen. Besonders bevorzugt wird das isotaktische Polypropylen, bei dem alle Methylgruppen auf einer Seite der zickzackförmig gedachten Molekülkette angeordnet sind, in den erfindungsgemäß eingesetzten Folien als Hauptkomponente eingesetzt.

Bei Abkühlen aus der Schmelze begünstigt der regelmäßige Aufbau des isotaktischen Polypropylens das Entstehen kristalliner Bereiche. Die Kettenmoleküle werden jedoch selten in ganzer Länge in einen Kristallit eingebaut, da sie auch nicht-isotaktische und damit nicht kristallisationsfähige Anteile enthalten. Außerdem entstehen amorphe Bereiche durch die Verschlaufungen der Ketten in der Schmelze, besonders bei hohem Polymerisationsgrad. Der kristalline Anteil ist von den Herstellbedingungen der Formteile abhängig und beträgt 50 % bis 70 %. Der teilkristalline Aufbau bewirkt wegen der hohen Sekundärkräfte im Kristallit etwas Festigkeit und Steifheit; während die ungeordneten Bereiche mit der höheren Beweglichkeit ihrer Kettensegmente oberhalb der Einfriertemperatur Flexibilität und Zähigkeit ergeben.

Beispiele für bevorzugte Polypropylene finden sich in WO 2020/127861 A1.

Die Dichte von Polypropylen ist sehr niedrig und liegt zwischen 0,895 g/cm³ und 0,92 g/cm³. Polypropylen hat eine Glasübergangstemperatur von 0 bis -10 °C. Der Kristallit-Schmelzbereich liegt bei 160 bis 170 °C, insbesondere zwischen 160 und 165 °C. Diese Temperaturen können durch Copolymerisation modifiziert werden; dem Fachmann sind die Maßnahmen dafür bekannt.

Bevorzugte Hauptkomponenten der erfindungsgemäß eingesetzten Folie sind Propylenhomopolymere, Propylencopolymere mit 1-10 Gew. % an Struktureinheiten, die von 1-Alkenen mit 4-8 C-Atomen abgeleitet sind, Propylenethylencopolymere mit 60 bis 90 Gew. % an von Propylen abgeleiteten Struktureinheiten sowie Kombinationen von zwei oder mehreren davon.

Besonders bevorzugt eingesetzte teilkristalline Propylenpolymere weisen einen Melt-Flow-Index zwischen 2 - 6 g / 10 Minuten, vorzugsweise zwischen 2 bis 5 auf, gemessen bei einer Temperatur von 230°C unter einer Belastung von 2,16 kg.

Besonders bevorzugt weist die erfindungsgemäß eingesetzte Polypropylenfolie einen niedrigen Metallgehalt auf. Dieses ist für den Einsatz als Kondensatorfolie wünschenswert, da bereits Spuren von Metallen im Dielektrikum die elektrischen Eigenschaften des Kondensators nachteilig beeinflussen können.

Vorzugsweise beträgt der Gesamtgehalt an Eisen, Kobalt, Nickel, Titan, Molybdän, Vanadium, Chrom, Kupfer, Magnesium und Aluminium in der erfindungsgemäß eingesetzten Folie weniger als 10 ppm.

Bevorzugt werden Kondensatoren, bei denen das Cycloolefinpolymer ein Cycloolefincopolymer ist.

Weiterhin bevorzugt werden Kondensatoren, bei denen das Cycololefinpolymer eine Glasübergangstemperatur zwischen 130 und 170 °C aufweist, vorzugsweise zwischen größer als 145 und 160 °C.

Ganz besonders bevorzugt werden Kondensatoren, bei denen das Cycololefinpolymer ein Cycloolefin-Copolymer ist, das aus Struktureinheiten besteht, die von Ethylen und Norbornen abgeleitet sind.

Ebenfalls ganz besonders bevorzugt werden Kondensatoren, bei denen das Polypropylen ein Propylen-Homopolymer oder ein Propylen-Copolymer mit anderen alpha-Olefinen ist, insbesondere ein teilkristallines Polypropylen mit einer Kristalllitschmelztemperatur zwischen 100 und 170°C, vorzugsweise zwischen 150 und 165°C.

Weiterhin bevorzugt werden Kondensatoren, bei denen das Polypropylen ein Kondensator-Grade-Polypropylen ist.

Ebenfalls bevorzugt werden Kondensatoren, bei denen die biaxial verstreckte Folie metallisiert ist.

Ganz besonders bevorzugt werden Kondensatoren, bei denen die biaxial verstreckte Folie keine Zusätze enthält.

Ganz besonders bevorzugt werden Kondensatoren, bei denen der Gesamtgehalt an Eisen, Kobalt, Nickel, Titan, Molybdän, Vanadium, Chrom, Kupfer, Magnesium und Aluminium in der biaxial verstreckten Folie weniger als 10 ppm beträgt.

Die Dicke der erfindungsgemäß eingesetzten Polypropylenfolien kann in weiten Bereichen variieren. Typische Dicken liegen im Bereich von 0,5 und 50 µm, insbesondere zwischen 0,5 und 20 µm, und ganz besonders bevorzugt zwischen 1 und 15 µm. Die Dicke des Formkörpers wird nach DIN 53370 ermittelt.

Die Herstellung der in den erfindungsgemäßen Kondensatoren eingesetzten Polypropylenblends kann grundsätzlich durch Vermischen der einzelnen Komponenten in dafür geeigneten Vorrichtungen erfolgen. Das Vermischen kann vorteilhaft in Knetern, Walzwerken oder Extrudern durchgeführt werden.

Die Menge an Cycloolefinpolymer im Polypropylenblend beträgt 3 bis 18 Gew. %, bezogen auf die Gesamtmischung, vorzugsweise zwischen 3 und 14 Gew. %, besonders bevorzugt zwischen 4 und 14 Gew.%, insbesondere zwischen 5 und 14 Gew. %, ganz besonders bevorzugt 6 bis 12 Gew. %, und äußerst bevorzugt zwischen 7 und 9 Gew. %.

Die Menge an Polypropylen im Polymerblend beträgt üblicherweise 97 bis 82 Gew. %, bezogen auf die Gesamtmischung, vorzugsweise zwischen 97 und 86 Gew. %, besonders bevorzugt zwischen 96 und 86 Gew.%, insbesondere zwischen 95 und 86 Gew. %, ganz besonders bevorzugt 94 bis 88 Gew. %, und äußerst bevorzugt zwischen 93 und 91 Gew. %.

Neben den zwingend vorhandenen Cycloolefinpolymer und dem Polypropylen kann der Polymerblend gegebenenfalls noch an sich übliche Zusatzstoffe enthalten. Der Gesamtanteil dieser Zusatzstoffe beträgt üblicherweise bis zu 5 Gew. %, bezogen auf die Gesamtmischung, vorzugsweise bis zu 2 Gew. % und insbesondere bis zu 1 Gew. %..

Zusatzstoffe, auch Hilfsstoffe oder Additive genannt, sind Stoffe, die im Polymerblend in geringen Mengen zugesetzt werden, um bestimmte Eigenschaften zu erreichen oder zu verbessern, beispielsweise um einen positiven Effekt auf Herstellung, Lagerung, Verarbeitung oder Produkteigenschaften während und nach der Gebrauchsphase zu erreichen.

Bei den Zusatzstoffen kann es sich um Verarbeitungshilfsmittel handeln, wie beispielsweise um Öle oder Wachse, oder um Zusätze, welche dem Polymerblend oder der erfindungsgemäß eingesetzten Polyolefinfolie eine bestimmte Funktion verleihen, wie Weichmacher, UV-Stabilisatoren, Mattierungsmittel, Konservierungsmittel, Biozide, Antioxidationsmittel, Antistatika, Flammschutzmittel, Verstärkungsmittel, Füllstoffe, Pigmente, Farbstoffe oder weitere Polymere.

Die erfindungsgemäß eingesetzte Polypropylenfolie wird durch Warmformen des vorstehend beschriebenen Polymerblends erhalten. Dabei können die bei der Herstellung von OPP-Folien bekannten Herstellungsbedingungen und Anlagen verwendet werden. Dieses ist von großem Vorteil, da der Prozess auf bestehenden Anlagen und unter Verwendung von bekannten Verfahrensparametern ausgeführt werden kann. Die extrudierte Folie wird dabei biaxial verstreckt und gegebenenfalls relaxiert (thermisch fixiert).

Beim biaxialen Verstrecken kann die vorgeformte und verstreckbare Folie gleichzeitig in Längsrichtung und Querrichtung gestreckt werden oder das Verstrecken kann nacheinander in beliebiger Reihenfolge erfolgen (z.B. zuerst in Längsrichtung und anschließend in Querrichtung). Darüber hinaus kann das Verstrecken in einem Einzelschritt oder in mehreren Schritten durchgeführt werden. Die Herstellbedingungen, insbesondere die Streckbedingungen, orientieren sich an den üblichen bekannten Bedingungen für industriell hergestellte biaxial orientierte Polypropylenfolien.

Das Streckverhältnis in Maschinenrichtung beträgt im Allgemeinen mindestens 1 : 2, vorzugsweise mindestens 1: 3 und insbesondere 1 : 3 bis 1 : 8. Das Streckverhältnis quer zur Maschinenrichtung beträgt im Allgemeinen mindestens 1 : 5, vorzugsweise mindestens 1: 8 und ganz besonderes bevorzugt 1 : 8 bis 1 : 12.

Die verstreckte Folie kann im Anschluss an das Verstrecken einer thermischen Fixierung unterzogen werden. Damit erreicht man eine besonders hohe Formbeständigkeit bei hohen Temperaturen. Die thermische Fixierung kann durch übliche Verfahren durchgeführt werden.

Erfindungsgemäß können auch coextrudierte Mehrschichtfolien eingesetzt werden. Dabei kann es sich um Mehrschichtfolien handeln, in denen mehrere der oben beschriebenen Polypropylenfolien miteinander kombiniert sind. Es kann sich aber auch um Mehrschichtfolien handeln, in denen ein oder mehrere der oben beschriebenen Polypropylenfolien mit anderen Folien kombiniert sind.

Bevorzugt sind Polypropylenfolien einschichtig oder 2-, 3-, 4- oder 5-schichtig, wobei mehrschichtige Polypropylenfolien wenigstens eine der oben beschriebenen Polypropylenfolien enthalten.

Die erfindungsgemäß eingesetzten Polypropylenfolien weisen vorzugsweise elektrische Durchschlagsfestigkeiten wie von herkömmlich eingesetzten Polypropylenfolien bekannt auf, vorzugsweise elektrische Durchschlagsfestigkeiten von >500 V/µm, nach DIN EN 60243-2 gemessen unter Gleichspannung bei 23°C und unter Verwendung einer kreisförmigen Elektrode mit einem Durchmesser von 50 mm.

Die erfindungsgemäß eingesetzten Polypropylenfolien weisen darüber hinaus vorzugsweise einen dielektrischen Verlustfaktor von kleiner gleich 0,002 auf, gemessen bei einer Frequenz im Bereich von 1 kHz und von 1 GHz bei einer Temperatur von 25°C.

Bei den erfindungsgemäßen Kondensatoren kann es sich um alle gängigen Kondensatortypen handeln. Diese können für den Einsatz bei Wechselstrom oder vorzugsweise bei Gleichstrom ausgelegt sein. Beispiele für Kondensatortypen sind Folienkondensatoren. Dabei handelt es sich in der Regel um gewickelte Kondensatoren, bei welchen entweder nur die metallisierte Folie (das metallisierte Dielektrikum) oder eine unmetallisierte Folie (unmetallisiertes Dielektrikum) zusammen mit einen dünnen Metallfolie gewickelt wird. Man unterscheidet in der Regel zwischen Schichtkondensatoren, Rundwickel-, Flachwickel- und Ring-Kondensatoren. Die Standard-Herstellungsverfahren der Kondensatoren sind dem Fachmann bekannt.

Die Erfindung betrifft auch die Verwendung einer biaxial verstreckten Folie enthaltend eine Mischung aus Polypropylen und Cycloolefinpolymer, wobei der Anteil an Cycloolefinpolymer in der Mischung zwischen 3 und 18 Gew. % beträgt, als Dielektrikum für Kondensatoren, wobei die biaxial verstreckte Folie nach 24-stündiger Behandlung mit Cyclohexan bei Raumtemperatur bei der rasterelektronenmikroskopischen Untersuchung keine Phasenstruktur zeigt und bei der lichtmikroskopischen Untersuchung eine Oberflächenstruktur ohne Fibrillen zeigt.

Die nachstehenden Beispiele erläutern die Erfindung ohne diese darauf einzuschränken.

### Beispiele V1, V2 und 1 bis 5

Biaxial verstreckte Folien aus Polypropylen sowie aus Polypropylen-Cycloolefincopolymermischungen wurden in einer Dicke von 6 µm hergestellt und metallisiert und daraus hermetisch versiegelte Rundwickelkondensatoren hergestellt.

An den Folien wurden die elektrischen Durchschlagsfestigkeiten bei 23°C nach DIN EN 60243-2 bestimmt, wobei Gleichspannung und sowie eine kreisförmige Elektrode mit einem Durchmesser von 50 mm eingesetzt wurde. In der nachstehenden Tabelle 1 sind Einzelheiten zu den verwendeten Folien und Kondensatoren sowie zu den Messergebnissen zu finden.

**Tabelle 1**

| Beispiel | Polymerzusammensetzung PP(%)¹⁾ COC(%)²⁾ | | T_{g} COC [°C] | Oberflächenrauhigkeit⁵⁾ Ra des Films [µm] | Durchschlagfestigkeit³⁾ [V/µm] | Kapazität⁴⁾ [µF] |
|---|---|---|---|---|---|---|
| V1 | 100 | 0 | - | 0,08 | 580 | 6,37 |
| 1 | 95 | 5 | 147 | 0,08 | 582 | 6,29 |
| 2 | 93 | 7 | 147 | 0,09 | 577 | 6,26 |
| 3 | 93 | 7 | 142 | 0,08 | 582 | 6,29 |
| 4 | 88 | 12 | 142 | 0,08 | 570 | 6,28 |
| 5 | 85 | 15 | 147 | 0,08 | 579 | 6,27 |
| V2 | 80 | 20 | 142 | 0,08 | 545 | 19,8 |

| | | | | | | |
|---|---|---|---|---|---|---|
| ¹⁾ Hochkristallines Polypropylen-Homopolymer, Kondensatorfolientype von Borealis ²⁾ Cyclooclefincopolymer aus Norbornen und Ethylen ³⁾ Messwerte sind Mittelwerte aus 10 Einzelmessungen ⁴⁾ Messwerte sind Mittelwerte aus 10 Einzelmessungen; Messung bei 1 kHz ⁵⁾ Oberflächenrauhigkeit bestimmt nach DIN 4769 | | | | | | |

Diese Beispiele zeigen, dass erfindungsgemäß eingesetzte PP/COC-Folien der Beispiele 1 bis 5 eine bessere Spannungsfestigkeit aufweisen als bislang für den Einsatz in Kondensatoren vorgeschlagene PP/COC-Folien.

Weiterhin zeigt sich eine bessere Homogenität der Polymermatrix und der Oberfläche. Erfindungsgemäß eingesetzte Folien kommen damit in wichtigen Eigenschaften bekannten OPP Kondensatorfolien näher als bislang für den Einsatz in Kondensatoren vorgeschlagene PP/COC-Folien.

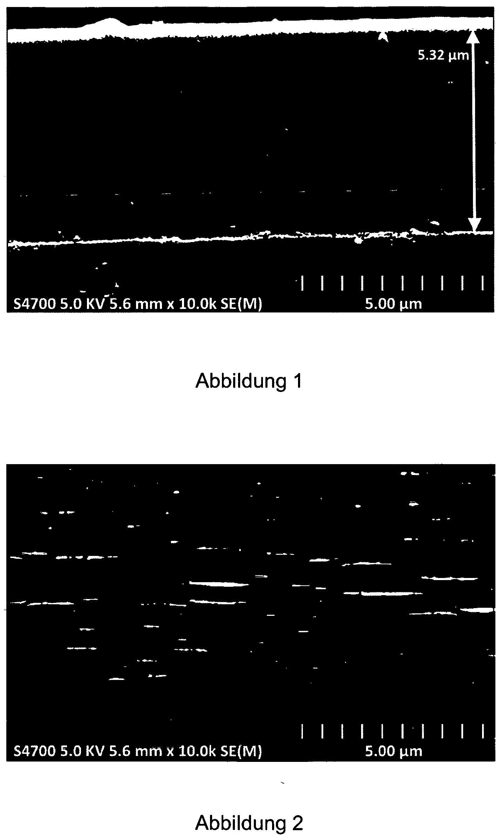

Abbildung 1 zeigt die rasterelektronenmikroskopische Aufnahme eines Querschnitts durch einen Film gemäß Beispiel V1, 1, 2, 3, 4 und 5. Abbildung 2 zeigt die rasterelektronenmikroskopische Aufnahme eines Querschnitts durch einen Film gemäß Beispiel V2.

Zur Herstellung der Abbildungen 1 und 2 wurden die Filme mit einem Mikrotom geschnitten und durch 24-stündigen Kontakt mit Cyclohexan bei Raumtemperatur wurden die COC-Phasen entfernt. Flächen, in denen Polymer entfernt worden ist, werden durch dieses Verfahren dunkel dargestellt. Als Rasterelektronenmikroskop wurde das Modell Hitachi S-4700 verwendet.

Aus den rasterelektronenmikroskopischen Aufnahmen der Folien nach Beispiel V2 lässt sich erkennen, dass das COC in der Polypropylenmatrix als separate Phase vorliegt. Derartige COC-Phasen in PP-Matrizen sind bereits bekannt und in der Research Disclosure Nr. 655030 vom November 2018 beschrieben. Die erfindungsgemäß eingesetzten Folien der Beispiele 1 bis 5 und die OPP-Folie des Beispiels V1 hingegen zeigen keine sichtbare Phasenstruktur (Auflösung ca. 0,1 µm).

Die obere Hälfte von Abbildung 3 zeigt eine lichtmikroskopische Aufnahme der Oberfläche eines Films gemäß Beispiel V1, 1, 2, 3, 4 oder 5. Für diese Aufnahmen wurden die Folien nicht präpariert. Die Folien wurden unter Schräglicht-Auflicht-Beleuchtung bzw.im Dunkelfeld und entsprechender Vergrößerung betrachtet. Die untere Hälfte von Abbildung 3 zeigt eine lichtmikroskopische Aufnahme der Oberfläche eines Films gemäß Beispiel V2. Erfindungsgemäß eingesetzte Filme der Beispiele 1 bis 5 zeigen dieselben für OPP-Kondensatorfolien typischen Oberflächenstrukturen. Im Gegensatz dazu zeigen Filme aus PP/COC-Blends des Beispiels V2 mit höherem COC-Anteil eine davon abweichende fibrillare Oberflächenstruktur.

Erfindungsgemäß eingesetzte Filme zeigen also eine Oberflächenstruktur, die ähnlich der der OPP-Kondensatorfolien ist. Bei den Filmen aus Vergleichsbeispiel V2 wird eine Oberflächenstruktur sichtbar, die aus der PP/COC-Mischstruktur stammt. Oberflächenstrukturen von PP/COC-Mischstrukturen sind bereits bekannt und in der Research Disclosure Nr. 655030 vom November 2018 beschrieben.

### Temperaturabhängigkeit der Durchschlagfestigkeit

Es wurde ein Test zur Bestimmung der Durchschlagfestigkeit gemäß DIN EN 60243-2 bei verschiedenen Temperaturen durchgeführt. Dabei wurde ein einschichtiger Film eingesetzt und Elektroden mit 50 mm Durchmesser verwendet. Die Ergebnisse finden sich in der nachfolgenden Tabelle 2.

**Tabelle 2**

| | Temperatur [°C] | | | |
|---|---|---|---|---|
| Filmtyp | 25 | 100 | 150 | 160 |
| Film nach Beispiel V1 | 579 V/µm | 448 V/µm | 288 V/µm | 262 V/µm |
| Film nach Beispiel 2 | 577 V/µm | 476 V/µm | 336 V/µm | 323 V/µm |

Die Durchschlagfestigkeit wird üblicherweise bei Raumtemperatur ermittelt. Messungen bei erhöhter Temperatur zeigen, dass der erfindungsgemäß eingesetzte Film aus Beispiel 2 eine höhere Durchschlagsfestigkeit aufwies als der Standard OPP-Film.

### Langzeitmessungen bei erhöhter Temperatur

Messungen der Langzeitbeständigkeit bei erhöhter Temperatur unter Spannung wurden an Kondensatoren aus Formulierungen gemäß Tabelle 1 durchgeführt. Zu Beginn einer Messreihe sowie nach Intervallen von ca. 250h wurden Kapazität und Verlustfaktor bei 50 Hz bei Raumtemperatur bestimmt und die Lagerung unter erhöhter Temperatur danach fortgesetzt.

In einem ersten Test wurden Kondensatoren aus Beispiel V1, 3 und 4 getestet. In den nachstehenden Tabellen 3 und 4 sind die Temperaturverläufe sowie die Messergebnisse zu finden.

Der Test wurde nach Ausfall aller Kondensatoren aus Beispiel V1 beendet.

**Tabelle 3**

| | | | PP-Film (Beispiel V1) | PP-COC-Film (Beispiel 3) | PP-COC-Film (Beispiel 4) |
|---|---|---|---|---|---|
| Zeit [h] | E-Feldstärke [V/µm] | Temperatur [°C] | Kapazität [µF] / (% Änderung) | | |
| 0 | | | 6,26 | 6,41 | 6,33 |
| 0 - 310 | 190 | 90 | 6,22 (-0,6%) | 6,41 (+0%) | 6,33 (+0%) |
| 310 - 530 | 190 | 120 | 6,18 (-1,3%) | 6,46 (+0,8%) | 6,36 (+0,5%) |
| 530 - 770 | 190 | 125 | 6,18 (-1,3%) | 6,46 (+0,8%) | 6,36 (+0,5%) |
| 770 - 1030 | 190 | 130 | 6,14 (-1,9%) | 6,47 (+0,9%) | 6,35 (+0,3%) |
| 1030 - 1370 | 190 | 130 | 6,07 (-3,0%) | 6,44 (+0,5%) | 6.35 (+0,3%) |
| 1370 - 1640 | 190 | 133 | ausgefallen | 6,40 (-0,1%) | 6,33 (+0,0%) |
| 1640 - 1900 | 190 | 145 | ausgefallen | 6,14 (-4,2%) | 6,26 (-1,1%) |
| Ausgefallene Einheiten bei Testende | | | 3 von 3 | 1 von 3 | 0 von 3 |

**Tabelle 4**

| | | | PP-Film (Beispiel V1) | PP-COC-Film (Beispiel 3) | PP-COC-Film (Beispiel 4) |
|---|---|---|---|---|---|
| Zeit [h] | E-Feldstärke [V/µm] | Temperatur [°C] | Verlustfaktor [*10⁻⁴] / (% Änderung) | | |
| 0 | | | 3,55 | 3,15 | 3,04 |
| 0 - 310 | 190 | 90 | 3,04 (-14%) | 2,82 (-10%) | 2,81 (-5%) |
| 310 - 530 | 190 | 120 | 3,74 (5%) | 4,17 (18%) | 3,40 (12%) |
| 530 - 770 | 190 | 125 | 3,53 (-3%) | 4,01 (13%) | 3,23 (6%) |
| 770 - 1030 | 190 | 130 | 5,81 (63%) | 4,29 (36%) | 4,21 (38%) |
| 1030 - 1370 | 190 | 130 | 13,20 (271%) | 4,13 (31%) | 4,18 (38%) |
| 1370 - 1640 | 190 | 133 | ausgefallen | 5,61 (57%) | 4,93 (62%) |
| 1640 - 1900 | 190 | 145 | ausgefallen | 52,5 (1566%) | 6,91 (127%) |
| Ausgefallene Einheiten bei Testende | | | 3 von 3 | 1 von 3 | 0 von 3 |

Aus den Ergebnissen ist klar zu erkennen, dass die erfindungsgemäßen Kondensatoren gegenüber den bekannten OPP-Kondensatoren eine deutlich verbesserte Stabilität der Eigenschaften unter Temperatureinfluss aufweisen.

In einem weiteren ähnlichen Langzeittest wurden Kondensatoren gemäß Beispielen V1, 1, 2 und 5 getestet. Die Kondensatoren der Beispiele 1, 2 und 5 wurden unter Verwendung von PP/COC Mischungen mit geringen COC Anteilen, und um 5°C höherer Glastemperatur des COC hergestellt.

In den nachstehenden Tabellen 5 und 6 sind die Temperaturverläufe sowie die Messergebnisse zu finden.

**Tabelle 5**

| | | | PP-Film (Beispiel V1) | PP-COC-Film (Beispiel 1) | PP-COC-Film (Beispiel 2) | PP-COC-Film (Beispiel 5) |
|---|---|---|---|---|---|---|
| Zeit [h] | E-Feldstärke [V/µm] | Temperatur [°C] | Kapazität [µF] / (% Änderung) | | | |
| 0 | | | 6,23 | 6,33 | 6,35 | 6,35 |
| 0 - 250 | 190 | 120 | 6,08 (-2,4%) | 6,33 (0%) | 6,40 (+0,6%) | 6,41 (+0,9%) |
| 250 - 500 | 190 | 125 | 5,92 (-5,0%) | 6,31 (-0,3%) | 6,39 (+0,8%) | 6,41 (+1,0%) |
| 500 - 800 | 190 | 130 | 5,09 (-18,3%) | 6,30 (-0,5%) | 6,36 (+0,2%) | 6,41 (+1,0%) |
| 800 - 1100 | 190 | 135 | ausgefallen | 6,25 (-1,3) | 6,32 (-0,5%) | 6,41 (+1,0%) |

**Tabelle 6**

| | | | PP-Film (Beispiel V1) | PP-COC-Film (Beispiel 1) | PP-COC-Film (Beispiel 2) | PP-COC-Film (Beispiel 5) |
|---|---|---|---|---|---|---|
| Zeit [h] | E-Feldstärke [V/µm] | Temperatur [°C] | Verlustfaktor [*10⁻⁴] / (% Änderung) | | | |
| 0 | | | 3,2 | 2,9 | 3,2 | 3,1 |
| 0 - 250 | 190 | 120 | 5,3 (67%) | 3,7 (28%) | 5,7 (82,5%) | 3,5 (8%) |
| 250 - 500 | 190 | 125 | 17,9 (465%) | 4,7 (63%) | 6,8 (116%) | 3,6 (15%) |
| 500 - 800 | 190 | 130 | 102 (3118%) | 5,3 (82%) | 7,1 (124%) | 4,6 (49%) |
| 800 - 1100 | 190 | 135 | ausgefallen | 7,2 (150%) | 7,2 (129%) | 4,6 (47%) |

Aus den Ergebnissen wird erkennbar, dass Kondensatoren gemäß Beispiel 2 bereits mit geringem COC-Gehalten eine erhöhte Temperaturstabilität aufweisen.

### Durchschlagfestigkeit von Kondensatoren in Öl

Es wurden Untersuchungen der Durchschlagsfestigkeit an ölimprägnierten Kondensatoren durchgeführt. Diese waren aus dem entsprechenden Film und Aluminiumfolie gewickelt und mit Rapsöl imprägniert. Die Elektrodenoberfläche betrug 2 m². Die Messungen erfolgten mit Gleichspannung und bei Raumtemperatur. Die Messergebnisse sind in der nachfolgenden Tabelle 7 aufgeführt.

**Tabelle 7**

| Filmtyp | Durchschlagfestigkeit [V/µm] |
|---|---|
| OPP-Folie; Beispiel V1 | 394 |
| PP/COC-Folie; Beispiel 2 | 394 |

Sowohl die ölimprägnierten Kondensatoren aus den bekannten OPP-Folien als auch Kondensatoren aus den erfindungsgemäß eingesetzten Folien zeigten die gleiche Durchschlagsfestigkeit.

## Patentansprüche

1. Kondensator enthaltend als Dielektrikum eine biaxial verstreckte Folie enthaltend eine Mischung aus Polypropylen und Cycloolefinpolymer, mit der Maßgabe, dass der Anteil an Cycloolefinpolymer in der Mischung zwischen 3 und 18 Gew. % beträgt, wobei die biaxial verstreckte Folie nach 24-stündiger Behandlung mit Cyclohexan bei Raumtemperatur bei der rasterelektronenmikroskopischen Untersuchung keine Phasenstruktur zeigt und wobei die biaxial verstreckte Folie bei der lichtmikroskopischen Untersuchung eine Oberflächenstruktur ohne Fibrillen zeigt.

2. Kondensator nach Anspruch 1, **dadurch gekennzeichnet, dass** der Anteil an Cycloolefinpolymer in der Mischung zwischen 3 und 14 Gew. % beträgt.

3. Kondensator nach Anspruch 2, **dadurch gekennzeichnet, dass** der Anteil an Cycloolefinpolymer in der Mischung zwischen 6 und 12 Gew. % beträgt.

4. Kondensator nach Anspruch 3, **dadurch gekennzeichnet, dass** der Anteil an Cycloolefinpolymer in der Mischung zwischen 7 und 9 Gew. % beträgt.

5. Kondensator nach mindestens einem der Ansprüche 1 bis 4, **dadurch gekennzeichnet, dass** das Cycloolefinpolymer ein Cycloolefincopolymer ist.

6. Kondensator nach mindestens einem der Ansprüche 1 bis 5, **dadurch gekennzeichnet, dass** das Cycololefinpolymer eine Glasübergangstemperatur zwischen 130 und 170 °C aufweist, vorzugsweise zwischen 140 und 160 °C, und insbesondere größer als 145 bis 160°C.

7. Kondensator nach mindestens einem der Ansprüche 1 bis 6, **dadurch gekennzeichnet, dass** das Cycololefinpolymer ein Cycloolefin-Copolymer ist, das aus Struktureinheiten besteht, die von Ethylen und Norbornen abgeleitet sind.

8. Kondensator nach mindestens einem der Ansprüche 1 bis 7, **dadurch gekennzeichnet, dass** Polypropylen ein Propylen-Homopolymer oder ein Propylen-Copolymer mit anderen alpha-Olefinen ist, insbesondere ein teilkristallines Polypropylen mit einer Kristalllitschmelztemperatur zwischen 100 und 170°C.

9. Kondensator nach mindestens einem der Ansprüche 1 bis 8, **dadurch gekennzeichnet, dass** das Polypropylen ein Kondensator-Grade-Polypropylen ist.

10. Kondensator nach mindestens einem der Ansprüche 1 bis 9, **dadurch gekennzeichnet, dass** die biaxial verstreckte Folie metallisiert ist.

11. Kondensator nach mindestens einem der Ansprüche 1 bis 10, **dadurch gekennzeichnet, dass** die biaxial verstreckte Folie keine Zusätze enthält.

12. Kondensator nach mindestens einem der Ansprüche 1 bis 11, **dadurch gekennzeichnet, dass** der Gesamtgehalt an Eisen, Kobalt, Nickel, Titan, Molybdän, Vanadium, Chrom, Kupfer, Magnesium und Aluminium in der biaxial verstreckten Folie weniger als 10 ppm beträgt.

13. Kondensator nach mindestens einem der Ansprüche 1 bis 12, **dadurch gekennzeichnet, dass** die biaxial verstreckte Folie eine Dicke zwischen 0,5 und 20 µm, gemessen nach DIN 53370, vorzugsweise zwischen 1 und 15 µm besitzt.

14. Verwendung einer biaxial verstreckten Folie enthaltend eine Mischung aus Polypropylen und 3 bis 18 Gew. % Cycloolefinpolymer als Dielektrikum in Kondensatoren, wobei die Prozentangabe auf die Gesamtmenge der Mischung bezogen ist, wobei die biaxial verstreckte Folie nach 24-stündiger Behandlung mit Cyclohexan bei Raumtemperatur bei der rasterelektronenmikroskopischen Untersuchung keine Phasenstruktur zeigt und bei der lichtmikroskopischen Untersuchung eine Oberflächenstruktur ohne Fibrillen zeigt.

## Claims

1. Capacitor comprising, as the dielectric, a biaxially stretched film containing a mixture of polypropylene and cycloolefin polymer, with the proviso that the proportion of cycloolefin polymer in the mixture is between 3 and 18% by weight, wherein the biaxially stretched film exhibits no phase structure upon scanning electron microscopic examination after 24-hour treatment with cyclohexane at room temperature, and wherein the biaxially stretched film exhibits a surface structure without fibrils upon light microscopic examination.

2. Capacitor according to claim 1, wherein the proportion of cycloolefin polymer in the mixture is between 3 and 14% by weight.

3. Capacitor according to claim 2, wherein the proportion of cycloolefin polymer in the mixture is between 6 and 12 wt.%.

4. Capacitor according to claim 3, wherein the proportion of cycloolefin polymer in the mixture is between 7 and 9 wt.%.

5. Capacitor according to at least one of claims 1 to 4, wherein the cycloolefin polymer is a cycloolefin copolymer.

6. Capacitor according to at least one of claims 1 to 5, wherein the cycloolefin polymer has a glass transition temperature between 130 and 170°C, preferably between 140 and 160°C, and in particular greater than 145 to 160°C.

7. Capacitor according to at least one of claims 1 to 6, wherein the cycloolefin polymer is a cycloolefin copolymer consisting of structural units derived from ethylene and norbornene.

8. Capacitor according to at least one of claims 1 to 7, wherein the polypropylene is a propylene homopolymer or a propylene copolymer with other alpha-olefins, in particular a semi-crystalline polypropylene having a crystallite melting temperature between 100 and 170°C.

9. Capacitor according to at least one of claims 1 to 8, wherein the polypropylene is a capacitor-grade polypropylene.

10. Capacitor according to at least one of claims 1 to 9, wherein the biaxially stretched film is metallized.

11. Capacitor according to at least one of claims 1 to 10, wherein the biaxially stretched film contains no additives.

12. Capacitor according to at least one of claims 1 to 11, wherein the total content of iron, cobalt, nickel, titanium, molybdenum, vanadium, chromium, copper, magnesium, and aluminum in the biaxially stretched film is less than 10 ppm.

13. Capacitor according to at least one of claims 1 to 12, wherein the biaxially stretched film has a thickness of between 0.5 and 20 µm, measured according to DIN 53370, preferably between 1 and 15 µm.

14. Use of a biaxially stretched film comprising a mixture of polypropylene and 3 to 18% by weight of cycloolefin polymer as a dielectric in capacitors, wherein the percentage is based on the total amount of the mixture, and wherein the biaxially stretched film, after 24-hour treatment with cyclohexane at room temperature, exhibits no phase structure upon scanning electron microscopic examination and exhibits a surface structure without fibrils upon light microscopic examination.

## Revendications

1. Condensateur comprenant comme diélectrique un film biorienté contenant un mélange de polypropylène et de polymère cyclooléfine, la proportion de polymère cyclooléfine dans le mélange étant comprise entre 3 et 18 % en poids selon lequel après 24 heures de traitement au cyclohexane à température ambiante, le film biorienté ne présente aucune structure de phase à l'examen au microscope électronique à balayage et présente une structure de surface sans fibrilles à l'examen au microscope optique.

2. Condensateur selon la revendication 1, **caractérisé en ce que** la proportion de polymère cyclooléfine dans le mélange est comprise entre 3 et 14 % en poids.

3. Condensateur selon la revendication 2, **caractérisé en ce que** la proportion de polymère cyclooléfine dans le mélange est comprise entre 6 et 12 % en poids.

4. Condensateur selon la revendication 3, **caractérisé en ce que** la proportion de polymère cyclooléfine dans le mélange est comprise entre 7 et 9 % en poids.

5. Condensateur selon au moins une des revendications 1 à 4, **caractérisé en ce que** le polymère cyclooléfine est un copolymère cyclooléfine.

6. Condensateur selon au moins une des revendications 1 à 5, **caractérisé en ce que** le polymère cyclooléfine présente une température de transition vitreuse comprise entre 130 et 170 °C, de préférence entre 140 et 160 °C, et particulièrement entre supérieure à 145 °C et 160 °C.

7. Condensateur selon au moins une des revendications 1 à 6, **caractérisé en ce que** le polymère cyclooléfine est un copolymère cyclooléfine constitué d'unités structurales dérivées de l'éthylène et du norbornène.

8. Condensateur selon au moins une des revendications 1 à 7, **caractérisé en ce que** le polypropylène est un homopolymère de propylène ou un copolymère de propylène avec d'autres alpha-oléfines, notamment un polypropylène semi-cristallin dont le point de fusion des cristallites est compris entre 100 et 170 °C.

9. Condensateur selon au moins une des revendications 1 à 8, **caractérisé en ce que** le polypropylène est un polypropylène de qualité condensateur.

10. Condensateur selon au moins une des revendications 1 à 9, **caractérisé en ce que** le film biorienté est métallisé.

11. Condensateur selon au moins une des revendications 1 à 10, **caractérisé en ce que** le film biorienté ne contient aucun additif.

12. Condensateur selon au moins une des revendications 1 à 11, **caractérisé en ce que** la teneur totale en fer, cobalt, nickel, titane, molybdène, vanadium, chrome, cuivre, magnésium et aluminium dans le film biorienté est inférieure à 10 ppm.

13. Condensateur selon au moins une des revendications 1 à 12, **caractérisé en ce que** le film biorienté présente une épaisseur comprise entre 0,5 et 20 µm, mesurée selon la norme DIN 53370, de préférence comprise entre 1 et 15 µm.

14. Utilisation d'un film biorienté contenant un mélange de polypropylène et de 3 à 18 % en poids de polymère cyclooléfine comme diélectrique dans les condensateurs, le pourcentage se référant à la quantité totale du mélange, selon lequel le film orienté biaxialement, après un traitement de 24 heures avec du cyclohexane à température ambiante, ne présentant aucune structure de phase sous microscopie électronique à balayage et une structure de surface sans fibrilles sous microscopie optique.
